# EUROPÄISCHE PATENTSCHRIFT

(11) **EP 2 685 111 B1**
(45) Veröffentlichungstag und Bekanntmachung des Hinweises auf die Patenterteilung: **01.05.2019**
(21) Anmeldenummer: 12176195.1
(22) Anmeldetag: 12.07.2012
(51) Int. Cl.: F16B 7/04

(54) **Klemmvorrichtung zum lösbaren Verbinden zweier Profilstücke**
Clamp piece for a detachable connection of two profile pieces
Dispositif de serrage de connexion amovibles de deux pièces profilées

(30) Priorität: 09.07.2012 EP 12175588
(43) Veröffentlichungstag der Anmeldung: 15.01.2014
(73) Patentinhaber: Syma Intercontinental AG, 9533 Kirchberg (CH)
(72) Erfinder: Strässle, Marcel, 9533 Kirchberg (CH); Züllig, Kurt, 9533 Kirchberg (CH)
(74) Vertreter: Liebetanz, Michael

(56) Entgegenhaltungen:
- EP-A1- 1 443 291
- WO-A1-2010/057324
- DE-U1- 29 801 042
- US-A- 4 712 286
- US-A- 5 403 083

## Beschreibung

### TECHNISCHES GEBIET

Die vorliegende Erfindung betrifft ein Profilverbindungssystem zum lösbaren Verbinden zweier Profilstücke mit den Merkmalen des Oberbegriffs des Anspruchs 1.

### STAND DER TECHNIK

Eine Klemmvorrichtung für ein Profilverbindungssystem der oben genannten Art ist beispielsweise aus der WO 99/09326 der Anmelderin bekannt. Die bekannte Klemmvorrichtung umfasst eine in ein erstes Profilstück eingesetzte Verschlusshülse, die mit entsprechenden Elementen in dem zweiten Profilstück verriegelt werden kann. Solche Klemmvorrichtungen sind dafür vorgesehen, zwei Profilstücke miteinander zu verbinden. Dabei handelt es sich bei dem einen Profilstück üblicherweise um eine profilierte Stange, an welche ein Wandprofil angesetzt wird. Das Wandprofil kann auch eine Querstrebe und weist üblicherweise eine grössere Querausdehnung als eine zumeist entlang der Längssachse ausgerichtete profilierte Stange auf. In dem Wandprofil ist seitlich für jede Klemmvorrichtung eine innere Ausfräsung vorgesehen, in die die Klemmvorrichtung bis zu den überstehenden Hakenelementen eingeschoben werden kann.

Eine solche Klemmeinrichtung ist auch aus der WO 97/25536 bekannt, wo auf der einen Seite der Wandoberfläche eine runde Bohrung vorgesehen ist, durch welche sich der Verriegelungskopf hindurcherstreckt, nachdem er gegen die Wirkung einer Federkraft in der Klemmvorrichtung versenkt durch die Ausfräsung bis zur Bohrung vorgeschoben worden ist. in welche er einrastet. Dabei wird diese Vorschlusshülse also in einer Ausfräsung der Wandplatte vorgeschoben und ein Bedienknopf ragt zumindest auf der einen Seite der Wandplatte aus dieser - insbesondere bündig - heraus. Der besagte Bedienknopf nimmt zugleich Zugkräfte auf, die auf die Wandplatte einwirken und diese von der Profilleiste zu trennen versuchen.

Diese Vorrichtungen weisen jeweils eine Verschlusshülse auf, in der die Hakenelemente und Verspannelemente integriert sind. Somit sind zur Übertragung von grösseren Kräften entsprechend grössere Hülsen vorzusehen, was die Anordnung solcher Elemente komplexer und aufwendiger macht, insbesondere wenn die zu tragenden Lasten nicht nur Wandelemente oder Verschalungen sind, sondern wenn ein solches Profilstück eine horizontale Strebe eines Gerüstes ist, auf dem beispielsweise eine Bodenfläche eines weiteren oberen Stockwerk vorgesehen ist, so dass dessen Lasten abzustützen sind.

Die DE 298 01 042 zeigt eine Anordnung zum Verbinden von zwei Hohlprofilen, wobei das eine Hohlprofil mindestens einen Haken und das andere mindestens einen entsprechenden Schlitz aufweist. Der Haken lässt sich mit einer Kniehebelanordnung spannen, wobei die Betätigung quer zur Längsrichtung mit einer Gewindespindel erfolgt.

Die WO 2010/057324 zeigt ein Verbindungselement zum Verbinden von zwei Profilen, welches zwischen die zwei zu verbindenden Profile geklemmt wird. Das Verbindungselement weist seitliche Haken auf, welche in Nuten der Profile eingreifen können. Die Haken können mit einer Gewindespindel gegeneinander verspannt werden, wodurch Klemmkräfte entstehen.

Die US 4,712,286 A beschreibt ein Warendisplaysystem mit einer Klemmvorrichtung, welche die Merkmale des Oberbegriffs des Anspruchs 1 aufweist.

### DARSTELLUNG DER ERFINDUNG

Es ist daher eine Aufgabe der vorliegenden Erfindung, ein Profilverbindungssystem anzugeben, die einen Zusammenbau vereinfacht, sicherer macht und die Lastabstützung der Querprofile in möglichst einfacher Weise gewährleistet.

Ein Profilverbindungssystem zum lösbaren Verbinden eines ersten mit einem zweiten Profilstücks und den Merkmalen des Oberbegriffs des Anspruchs 1 wird durch die kennzeichnenden Merkmale des Anspruchs bereitgestellt.

Das Verspannelement kann dann eine mit der Platte verbundene Schraube oder einen Bolzen sowie Sicherungselementen umfassen, welche Schraube oder welcher Bolzen in einen hinter der Platte vorgesehenen Hohlraum ragt, um mit den Sicherungselementen gegen das zweite Profilstück verspannbar zu sein.

Das Verspannelement kann aus einer Schraube und einer Mutter als Sicherungselement bestehen. Dann kann insbesondere unter der Schraube eine Halteklammer angeordnet sein, die mit Längsnuten in die beiden den die Platte aufnehmenden Hohlraum bildende Seitenwände eingreifen, um verdrehsicher die Kraft über eine grössere Fläche auf die recht dünnen Wandelemente zu übertragen.

Das Verspannelement kann auch ein Bolzen mit einer Hebelverriegelung als Sicherungselement sein, also einen umschwenkbaren Hebel umfassen, mit dem über eine Ablaufkurve eine Schliesskraft auf den Bolzen übertragen wird, vorteilhafterweise über einen Totpunkt hinweg.

Die Verriegelungselemente sind Bolzen, die quer durch die Ausnehmung ragen, um beim Zusammenbau von dem oder den Hakenelementen umgriffen zu werden und um zur Verriegelung durch das Verspannelement gegenüber der Platte angezogen zu werden. Bei solchen Bolzen können diese eine Querbohrung zur Aufnahme eines Sicherungssplints aufweisen, wenn das andere Ende einen Flansch aufweist. Die Bolzen sind dabei in quer verlaufenden Löchern vorgesehen.

Die Wand hinter der Ausnehmung im Bereich der Bolzen kann dabei durchbrochen sein, um ein Hintergreifen der Bolzen durch die Schieberplatte zu gestatten. Dabei ist der Durchbruch der Wand hinter der Ausnehmung zum Beispiel ein Schlitz. Die Unterkante des Durchbruchs der Wand hinter der Ausnehmung kann dabei als Widerlager für die Unterkante der Schieberplatte dienen.

Die Platte kann mit ihrer Oberseite in führendem und lasttragendem Kontakt in dem zweiten Profilstück verspannbar sein und die Unterseite der Platte ist auf einer Fläche des ersten Profilstücks lasttragend abstützbar. Alternativ ist die Unterseite der Hakenausnehmung(en) auf mit der Platte lasttragend verbundenen Element(en) abstützbar ist.

In Aluminiumprofile als Pfosten eingesetzte Stahlbolzen, insbesondere mit etwas vergrössertem Durchmesser wie 10 bis 15 Millimeter gegenüber der Wandstärke eines Schlitzes für das Hintergreifen durch die Nasen, weisen Vorteile beim Tragen der Last auf. Sie können in einem Presssitz vorgesehen sein und damit unverlierbar mit dem Aluminiumprofil verbunden sein. Die Unterstützungsfläche ist dann in den seitlichen Flanken der Wände und damit stabiler als in der Höhe über vielleicht mehrere Schlitze in der rückwärtigen Wand.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische Ansicht eines Einsatzes einer nicht gemäss der Erfindung ausgestalteten in einem zweiten Profilstück vorgesehenen Klemmvorrichtung an einem vertikalen Profilpfosten;
- Fig. 2: eine perspektivische Detailansicht einer in einem zweiten Profilstück vorgesehenen Klemmvorrichtung als Teil eines Profilverbindungssystems gemäss einem Ausführungsbeispiel der Erfindung;
- Fig. 3: eine perspektivische Detailansicht einer in einem anderen zweiten Profilstück vorgesehenen Klemmvorrichtung als Teil eines Profilverbindungssystems gemäss einem Ausführungsbeispiel der Erfindung;
- Fig. 4: eine perspektivische Ansicht eines Einsatzes einer in einem anderen zweiten Profilstück vorgesehenen Klemmvorrichtung als Teil eines Profilverbindungssystems mit einer Querstrebe als erstes Profilstück mit einem Kupplungselement für das zweite Profilstück als Teil eines Profilverbindungssystems gemäss einem Ausführungsbeispiel der Erfindung;
- Fig. 5: eine perspektivische Ansicht eines Stützkopfes für eine Klemmvorrichtung mit einem Profilpfosten als erstem Profilstück als Teil eines Profilverbindungssystems gemäss einem Ausführungsbeispiel der Erfindung;
- Fig. 6: eine teilweise geschnittene Ansicht eines Stützkopfes nach Fig. 5 mit angesetztem Querprofil mit Klemmvorrichtung für ein Profilverbindungssystem gemäss einem Ausführungsbeispiel der Erfindung;
- Fig. 7: eine perspektivische Ansicht des vertikalen Profilpfostens aus Fig. 1 (nicht zum Einsatz nach der Erfindung geeignet);
- Fig. 8: eine perspektivische Ansicht eines Einsatzes eines Ausführungsbeispiels einer Klemmvorrichtung für ein Profilverbindungssystem gemäss der Erfindung an einer Variante eines vertikalen Profilpfostens;
- Fig. 9: eine teilweise geschnittene Ansicht eines Profils nach Fig. 8 mit angesetztem Querprofil mit Klemmvorrichtung für ein Profilverbindungssystem gemäss einem Ausführungsbeispiel der Erfindung; und
- Fig. 10: eine perspektivische Ansicht eines Einsatzes eines Ausführungsbeispiels einer Klemmvorrichtung für ein Profilverbindungssystem gemäss der Erfindung an einer weiteren Variante der Befestigung eines vertikalen Profilpfostens.

### BESCHREIBUNG BEVORZUGTER AUSFÜHRUNGSFORMEN

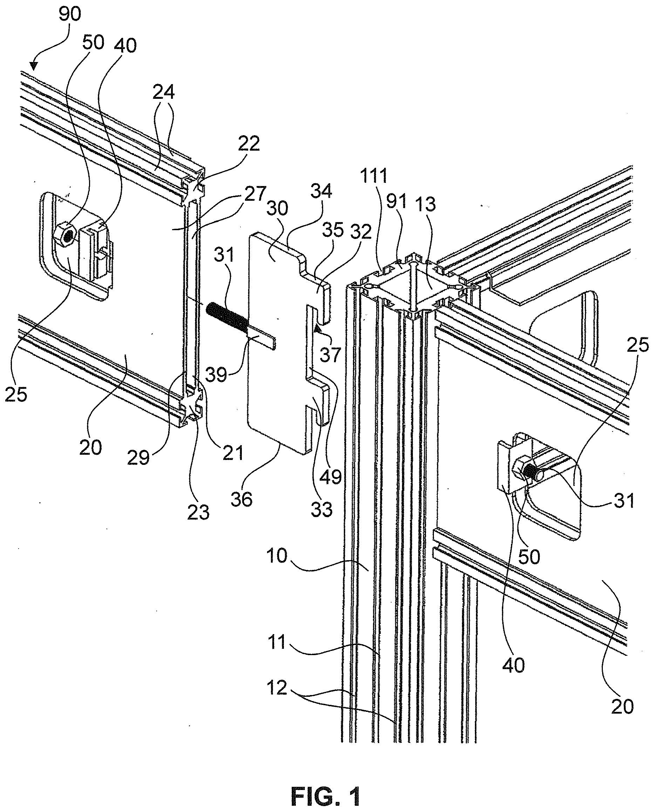

Die Fig. 1 zeigt eine perspektivische Ansicht eines Einsatzes einer nicht gemäss der Erfindung ausgestalteten in einem zweiten Profilstück vorgesehenen Klemmvorrichtung an einem vertikalen Profilpfosten 10. Der Profilpfosten 10 ist ein erstes Profilstück, welcher Pfosten üblicherweise vertikal aufgestellt wird. Er ist beispielsweise ein Aluminiumprofil mit einem inneren Hohlraum 13 und mit mindestens an jeder seiner vier Seiten einer mittleren Nut 11 als Befestigungsnut. Hier handelt es sich um einen Pfosten 10 mit noch jeweils zwei seitlich weiter vorgesehenen Nuten 12 beidseitig zur mittleren Nut 11. Üblicherweise werden hier nicht dargestellte Wandelemente in diesen Nuten 11, 12 und 13 befestigt und durch quer in die Hinterschneidungen der Nuten eingreifende Verschlüsse gehalten.

Bei der vorliegenden Erfindung ist dagegen das Ziel, ein zweites quer orientiertes Profilstück 20 an dem ersten Profilstück 10 zu befestigen, das auf dessen Oberseite 90 wirkende Lasten auf den Pfosten 10 ableiten kann.

An den zentralen Pfosten 10 sind auf der rechten Bildseite bereits zwei zweite Profilstücke 20 als Querstreben befestigt. Die Befestigung sieht man insbesondere daran, wie sich aus der weiteren Beschreibung ergeben wird, dass eine Mutter 50 auf eine Verriegelungsschraube 31 aufgesetzt ist und dabei eine Halteklammer 40 auf eine Innenwand dieser Querstrebe 20 drückt.

In einer Explosionsdarstellung der Fig. 1 ist ein weiteres zweites Profilstück 20 auf der linken Bildseite dargestellt, bevor es an dem Profilpfosten 10 befestigt wird.

Das zweite Profilstück 20 verfügt über eine obere Profilschiene 22 mit drei Anbaunuten 24, die nach oben und zu den beiden Seiten ausgerichtet sind und vorteilhafterweise aber nicht notwendigerweise Hinterschneidungen aufweisen. Am unteren Ende ist eine untere Profilschiene 23 mit ebenfalls drei Anbaunuten vorgesehen. Dazwischen erstreckt sich eine zumindest in diesem Endbereich der Querstrebe 20 hohle Verbindungswand, die aus zwei Seitenwänden 27 besteht, zwischen denen ein Aufnahmehohlraum 21 besteht.

Der Aufnahmehohlraum 21 endet im Bereich der oberen bzw. unteren Profilschiene 22 und 23 in einer abgestuften Führungsnut 26, in welcher die Schieberplatte 30 geführt wird. Die Schieberplatte 30 ist ein im grossen und ganzen rechtwinkliges Element mit flachen gegenüberliegenden Seitenwänden, in dem rückwärtig in der Mitte eine Verriegelungsschraube 31 befestigt ist, wobei diese über das Verbindungselement 39 einstückig mit der Schieberplatte verbunden ist. Es kann sich dabei in einfacherweise um eine Metallplatte 30 handeln, die im Bereich des Verbindungselementes 39 eine Ausnehmung aufweist, in die ein abgeflachtes Ende ohne Gewinde der Verriegelungsschraube 31 eingesetzt ist. Die Dimensionen des Aufnahmehohlraums 21 und der Schieberplatte 30 sind dergestalt, dass die obere Kante 34 und die untere Kante 36 jeweils in die gegenüberliegenden Führungsnuten 26 einpassen und bei einem Hineinschieben der Schieberplatte in die Ausnehmung 21 die Verriegelungsschraube 31 in die Verriegelungsausnehmung 25 hineinragt, während auf der anderen Seite die beiden Haken 32 und 33 über die Kanten der Vorderwände 27 des zweiten Profilstückes 20 hinausstehen. Die Verriegelungsschraube 31 durchtritt eine Halteklammer 40 in deren zentralen Öffnung 42 und wird durch eine Mutter 50 gekontert.

Die beiden Haken 32 und 33 stehen über eine vordere Anlagekante 49 hinaus. Im oberen Bereich ist die obere Seitenfläche 34 durch eine abgesetzte Stufe 35 nach unten versetzt.

In der mittleren Nut 11 des Profilpfostens 10 sind verschiedene durch die Wand des Profilpfostens 10 hindurchführende und somit in den Innenhohlraum 13 gelangende (und in der Fig. 1 nicht dargestellte) Ausnehmungen (Schlitze 14 und 15 in Fig, 7) vorgesehen, in welche die Haken 32 und 33 eingesetzt werden können. Die Ausnehmungen 14 und 15 sind dabei so angeordnet, dass bei einem Einhaken der Haken 32 und 33 durch den Hakenhohlraum 37 die Oberkante 91 der oberen Profilschiene 22 vorteilhafterweise bündig mit einem vordefinierten Position bzw. Ende des Profilpfostens 10 einnimmt. Dies ist bei den beiden bereits rechts eingezeichneten zweiten Profilstücken 20 genauso der Fall.

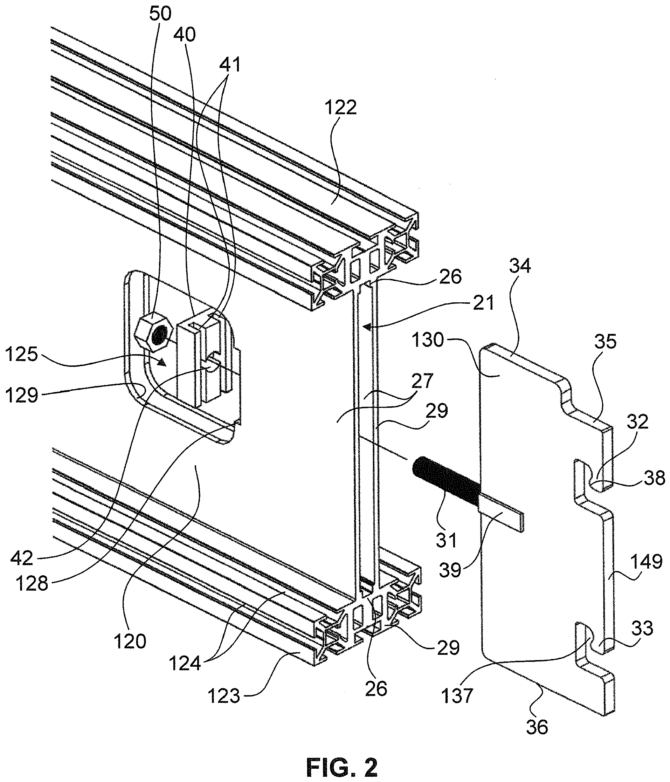

Die Fig. 2 zeigt eine perspektivische Ansicht eines Einsatzes eines Ausführungsbeispiels einer Klemmvorrichtung an einem anderen Ausführungsbeispiel eines Profilstücks. In der vorliegenden Beschreibung werden verschiedene erste Profilstücke 10, 110 genannt oder als Verlängerungsprofil 210 beschrieben; und gleichfalls sind verschiedene Querstreben 20, 120, 220, 320 als Anschraubprofil in jeder Kombination möglich. Es sind jeweils ähnliche Merkmale mit ähnlichen Bezugszeichen bezeichnet. In dieser Fig. 2 weist das zweite Profilstück 120 eine obere und untere Profilschiene 122 bzw. 123 auf, welche drei Anbaunuten zur Oberseite bzw. Unterseite aufweist und somit eine Struktur wie der Pfosten 10 mit drei Nuten umfasst.

Damit wird zudem ermöglicht, Anbaunuten 124 vorzusehen, die auch in die entgegengesetzte Richtung ausgerichtet sind. Ansonsten sind die beiden Seitenwände 127, die mit den Führungsnuten 26 den Hohlraum zur Aufnahme des hier leicht veränderten Schieberplattenelementes 130 bilden, gleich ausgestaltet. Die Verriegelungsschraube 31 tritt durch die Durchführungsöffnung 42 der Halteklammer 40 hindurch, die zwei dazu quer verlaufende Ausrichtungsnuten 41 aufweisen. Die Ausrichtungsnuten 41 sind dafür vorgesehen, in die Seitenwände 129 der Ausnehmung einzugreifen und somit ein Verdrehen dieses Elementes 40 zu vermeiden. Für eine bessere Ausrichtung der Halteklammer 40 ist zudem eine mit der Stufe 128 abgesetzte Vertiefung in den Seitenwänden 129 vorgesehen, so dass beim Anziehen der Mutter 50 auf der Schraube 31 die Halteklammer 40 sich in die Stufe 128 einpasst und in dieser Endlage die Schraube 31 anzieht und somit die Haken 32 und 33 in ihre Richtung bewegt. Dabei wird die Vorderfläche des Stützpfostens 10 in Kontakt gebracht mit der Vorderseitenwand 29 des Profilstücks 20. Diese Wand 29 wird sowohl von Bereichen der beiden Seitenwänden 27 als auch von den vorderen Enden der oberen und unteren Profile 22 und 23 gebildet.

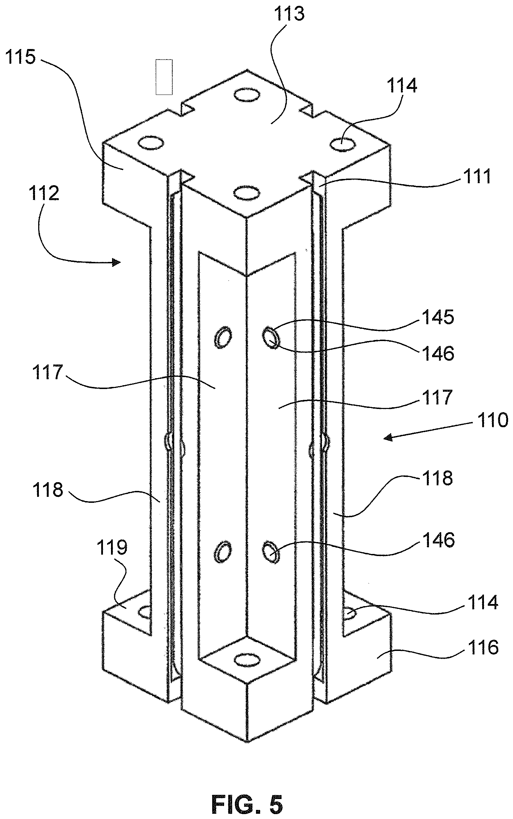

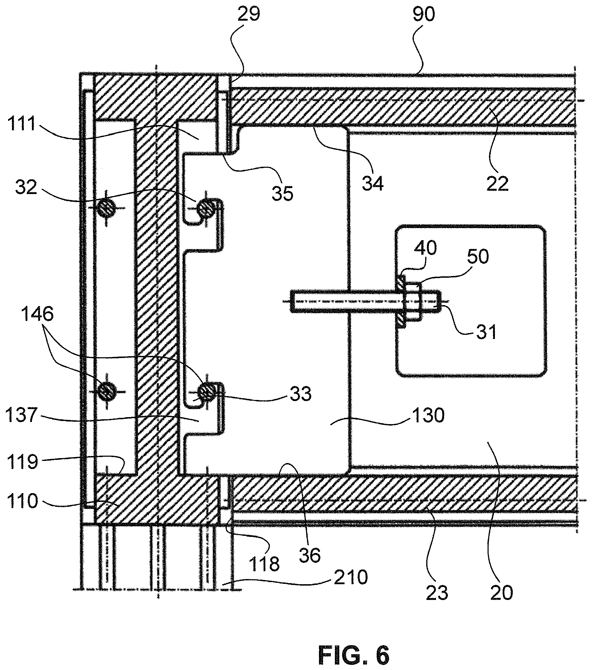

Die Schieberplatte 130 weist wie die Schieberplatte 30 aus der Fig. 1 eine Oberkante 34 und eine Unterkante 36 auf, wobei hier die Haken 32 und 33 innerhalb der Vorderkante oder Anlagekante 149 der Schieberplatte 130 angeordnet sind. Somit bilden die Hakenhohlräume 137 L-förmige Ausnehmungen, wobei zum sicheren Einhängen hier zusätzlich die Haken 32 und 33 mit entsprechenden vorspringenden Hakennasen 38 versehen sind, was eine andere Befestigung an einem Stützpfosten 10 unterstützt, wie es im Folgenden mit einer Beschreibung der Fig. 5 und 6 vorgesehen sein wird.

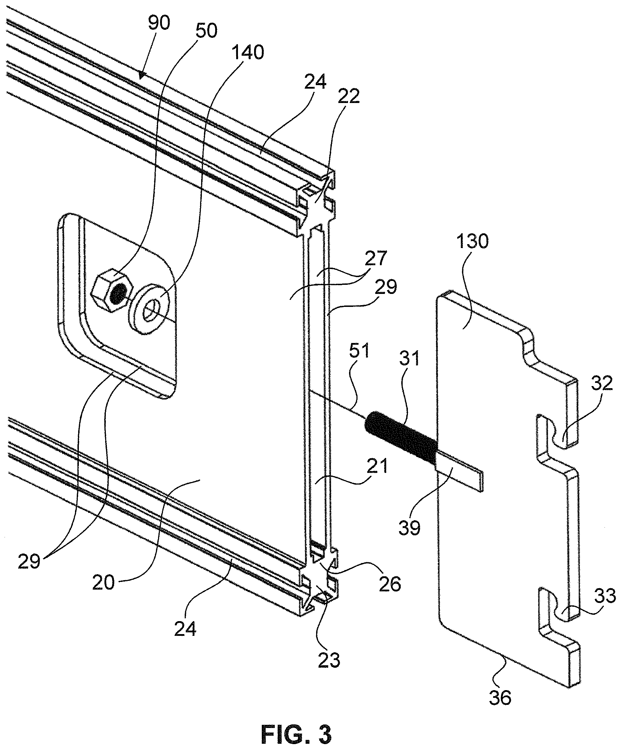

Die Fig. 3 zeigt eine perspektivische Ansicht eines Einsatzes eines Ausführungsbeispiels einer Klemmvorrichtung mit einem anderen Ausführungsbeispiel eines Verspannelementes. Das Verspannelement in den Fig. 1 und 2 war eine Halteklammer 40 mit Vertikalnuten 41 zur orientierten Halterung an den Seitenwänden 27 des zweiten Profilstückes 20. Bei einem anderen einfacheren Ausführungsbeispiel kann dieses Verspannelement auch einfach eine Unterlegscheibe 140 sein, durch die die Schraube 31 entlang der Schraubenachse 51 geführt ist. Ansonsten entspricht die Seitenwand 20 hier der Querstrebe aus der Fig. 1 mit einer nur eine Nut 24 aufweisenden Oberseite 90.

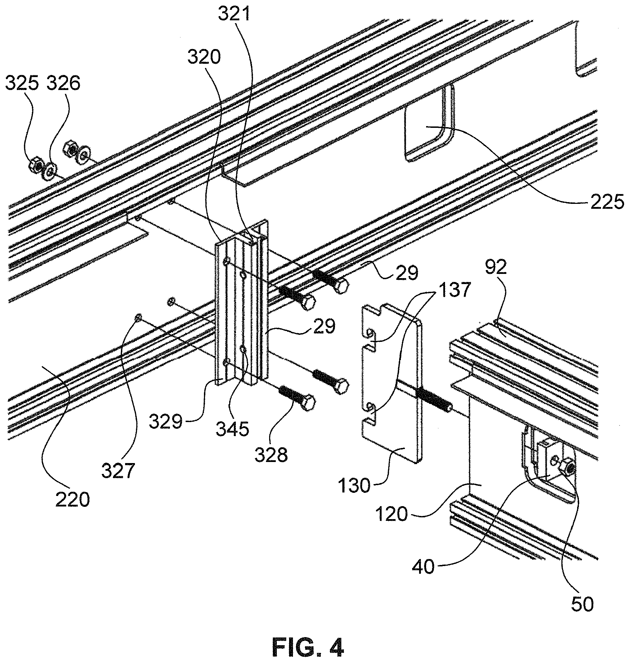

Die Fig. 4 zeigt eine perspektivische Ansicht eines Einsatzes eines Ausführungsbeispiels einer Klemmvorrichtung mit einer Querstrebe 220 als zweites Profilstück mit einem Kupplungselement 320 für ein weiteres zweite Profilstück 120 in dieser Figur. Das Kupplungselement ist das zweite Anbauprofilstück 320, welches mit Hilfe von hier vier Befestigungsschrauben 328, die durch Öffnungen in den Seitenlängsflanschen 329 des Aufschraubprofils 320 geführt sind, durch entsprechende Befestigungslocher 327 in der Querstrebe 220 hindurchtreten, um dann auf der anderen Seite der dortigen Wand über eine Mutter 325 und Unterlegscheibe 326 Kombination sicher befestigt zu werden. Somit ist es möglich, auf einer zweiten Querstrebe 220, bei der es sich auch um die Streben 120 oder 20 handeln kann, ein Zwischenprofil zwischen den Pfosten anzuordnen, um die auf der Oberseite 92 aufgesetzte Last über die Querstrebe hier 220 auf einen Stützpfosten 10 (in der Figur nicht dargestellt) abzuleiten.

Das Aufschraubprofil 320 verfügt über einen vertikal ausgerichteten Aufnahmehohlraum 321, in welchem im vorderen Bereich eine hinterschnittene Nut vorgesehen ist. Wie auch bei dem Aufnahmehohlraum 11 ist es nicht zwangsweise notwendig, dass diese Nut hinterschnitten ist. Bei der Fig. 1 ist in der Tiefe des Aufnahmehohlraum 11 eine längs des Pfosten ausgerichtete Kombination von Schlitzen für den Durchgriff der Nasen 32, 33 vorgesehen; hier sind quer zu diesem Aufnahmehohlraum Bolzenlöcher 345 vorgesehen, in die, wie später beschrieben werden wird, Bolzen 146 durchgeführt werden, die dann in die Hakenhohlräume 37 der Schieberplatte eingreifen werden. Die Befestigung und Fixierung in horizontaler Richtung geschieht auch hier wieder über die Kombination von Halteklammer 40 und Mutter 50. Dabei wird die Vorderseitenwand 29 des in dieser Situation zweiten Profilstücks 120 auf die Flächen 29 des Anbau-Profilstücks 320 und der Querstrebe 220 gezogen und horizontal verriegelt.

Die Fig. 5 zeigt einen Stützkopf 110, welcher im Zusammenspiel mit den Pfosten 10 eingesetzt wird. Dieser Stützkopf 110 ist im Wesentlichen ein Adapterstück, welches, wie das Anbauprofilstück 320, exakt für den Zweck der Befestigung der Querstreben 20, 120 etc. vorgesehen ist. Der Stützkopf 110 weist eine Oberseite 113 und eine entsprechende gegenüberliegende Unterseite auf, die beide eben ausgestaltet sind und in welchen jeweils in Längsrichtung des Stützkopfes 110 in den Ecken durchgehende Löcher 114 zur Befestigung an den entsprechend weiterlaufenden Profilen vorgesehen sind. Diese Ecken haben eine flache Eckoberfläche 119 Hier ist die Einführnut 111 im Formmaterial ausgefräst und im mittleren Bereich hinterschnitten, wie sich aus dem gebogenen Anschnittbereich an den Enden der Nut aus der Figur ersehen lässt. An allen vier Ecken bestehen Eckausnehmungen 112 über eine wesentliche Länge zwischen Bodenabschnitt 116 und Deckelabschnitt 115 des Stützkopfes 110. Quer zu den Nuten 111 sind hier jeweils zwei Bolzenlöcher 145 durch jede Wand 117 des Nuten 111 vorgesehen, durch die jeweils ein Bolzen 146 einsetzbar ist. Dieser Bolzen 146 bildet dann die Möglichkeit für die Schieberplatte 30, 130 aus, über diesen hinwegzugreifen und sich in ihn einzuhaken.

Dabei wird dann die Vorderwand 118 in horizontal kraftschlüssigen Kontakt mit der entgegengesetzten Vorderwand 29 der Querstrebe 20 gezogen, gebracht und gehalten.

Die Fig. 6 zeigt nun in einer geschnittenen Ansicht durch einen solchen Stützkopf 110 die seitliche Befestigung einer Schieberplatte 130. Der Stzützkopf 110 ruht auf einem Verlängerungsprofil 210 und ist beispielsweise durch (nicht dargestellte) Schrauben und Bolzen durch die Öffnungen 114 mit diesem verbunden. Durch die quer verlaufenden Bolzenlöcher 145 sind entsprechende Bolzen 146 eingeführt, bei denen es sich beispielsweise um 12 Millimeter Durchmesser aufweisende Bolzen handeln kann, die im Bereich der Einführungsnut 111 nur eine Dicke von 10 Millimeter aufweisen. Diese Dicke von 10 Millimetern entspricht dann auch - mit Masstoleranzen - dem Durchmesser der Hakenhohlräume 37.

Bei den in der Fig. 6 dargestellten Einsätzen ist zu erkennen, dass der obere Stufenabschnitt 35 notwendig ist, um den notwendigen Freiraum in der Einführnut 111 zu nutzen, damit der obere Haken 32 über den Bolzen 146 greifen kann. Die Oberseite 34 der Schieberplatte 30 ruht gegen die Unterseite der Einführnut 26 und nimmt somit das Gewicht, welches auf dem Element lastet, beispielsweise auf der Oberseite 90, auf. Dieses gibt (in der Fig. 6) in einem schrägen Winkel von rechts oben nach links unten die Last auf die untere Seitenkante 36 weiter und zwar auf den Bereich, der sich auf der Unterseite der Einführnut 111 auf den Eckflächen 119 abstützt. Somit ruht nicht das Gewicht die Querstrebe 20 betreffenden Lasten, ausgehend von der Oberseite 90, auf den Verschlusselementen, hier Haken 32 und Bolzen 146, sondern auf dem Stützpfosten 110 selber und somit auf der Verlängerung des Profilpfostens 210. Die Mutter 50 wird somit auch nur noch angezogen, um sicherzustellen, dass die Haken 32 und 33 sich sicher in ihren Aufnahmehohlräumen 137 befinden. Es werden dadurch also im wesentlichen nur längs der Achse 51 aus der Fig. 4 wirkende Kräfte aufgenommen.

Somit wird in einfacher Weise eine sehr effiziente Lastübertragung von einer Querstrebe 20, 120, 220, 320 auf einen Pfosten 10, 110, 210 mit einfach aufzubauenden Elementen erreicht, welche grosse auf den Oberseiten 90, 91, 92 wirkende Lasten in sicherer Weise übernehmen können.

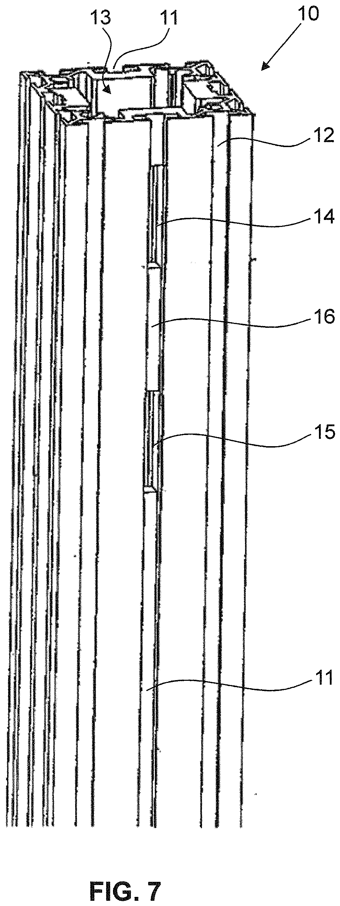

Die Fig. 7 zeigt eine perspektivische Ansicht des vertikalen Profilpfostens 10 aus Fig. 1. In der mittleren Nut 11 sind die beiden Schlitze 14 und 16 erkennbar zwischen denen der Vollbereich des Bodens 16 der Nut 11 zu sehen ist. Die Schlitze 14 und 16 haben eine Länge, dass sie die Haken 32 und 33 aufnehmen können. Die Höhe des oberen Schlitzes 14 ist so, dass das zweite Profil 20 bei eingesetztem Schieber 30 oben bündig mit der Oberseite 91 ist. Beispielsweise kann dies ein Abstand von 2,5 Zentimeter sein; wobei die beiden Haken 32 und 33 in Schlitze 14 und 15 mit einer Länge von 5 Zentimeter ragen, zwischen denen 6 Zentimeter Abstand besteht. Es können auch drei und mehr Schlitze vorgesehen sein, um die Streben 20 an unterschiedlichen Höhen anbringen zu können. Die zwei Schlitze 14 und 15 können auch weiter entfernt von der oberen Kante angeordnet sein. Bei einem Einsetzen des Schiebers 30 ragt dessen Vorderkante 49 an den Nutboden 16 und stösst somit an diesen an. Es wäre auch möglich einen in den Zeichnungen nicht dargestellten Einsatz in einen dritten Schlitz einzusetzen, auf dem dann der vordere Abschnitt der Unterseite 36 abgesetzt sein könnte.

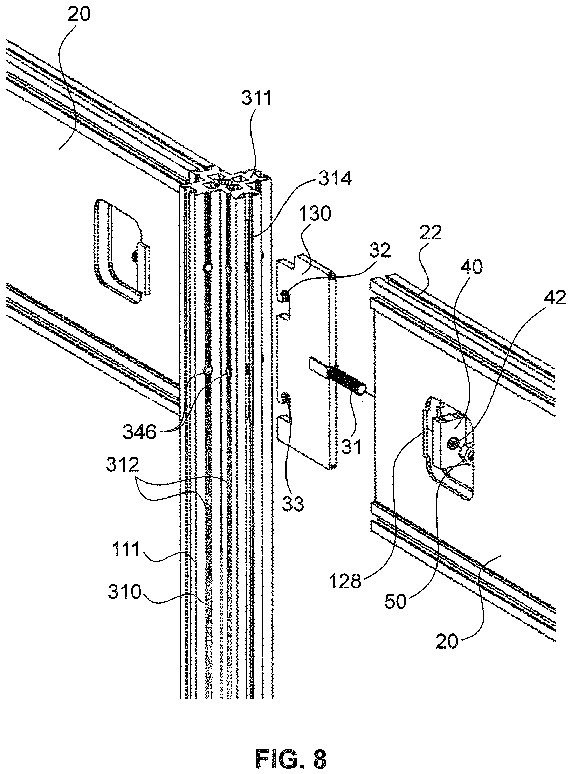

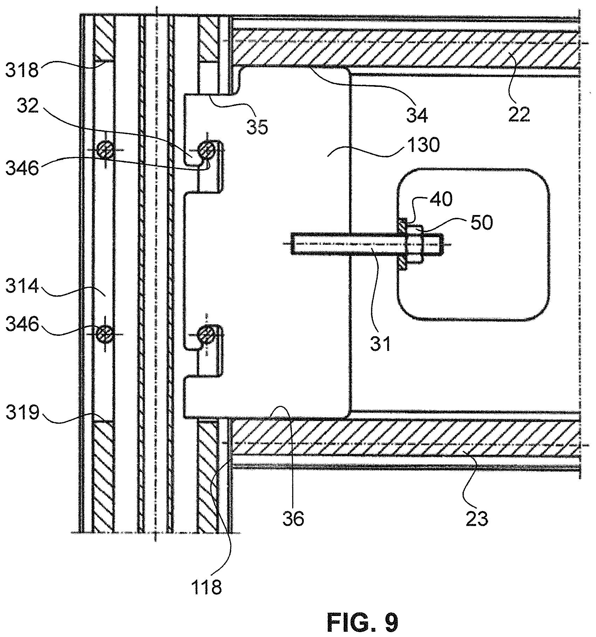

Die Fig. 8 zeigt eine perspektivische Ansicht eines Einsatzes eines Ausführungsbeispiels einer Klemmvorrichtung gemäss der Erfindung an einer Variante eines vertikalen Profilpfostens 310. Die Fig. 9 zeigt dazu eine teilweise geschnittene Ansicht des Profils 210 nach Fig. 8 mit angesetztem Querprofil 20 mit Klemmvorrichtung gemäss einem Ausführungsbeispiel der Erfindung. Die Benutzung gleicher und ähnlicher Bezugszeichen zeigt, dass die einzelnen Merkmale eines Pfostens 310 mit geeigneten Querprofilen 130 verbindbar sind. Hier ist eine einzelne vordere hinterschnittene Nut 111 vorgesehen, die mit einer Rückwand 311 zu einem Hohlraum im Profil 310 abgeschlossen ist. Prinzipiell wäre es möglich, wie bei dem Beispiel nach Fig. 7 einen Schlitz in dieser Wand vorzusehen, um dann die Nasen 32, 33 eines Querprofils einzuhängen. Bei Lasttrageversuchen hat die Anmelderin aber festgestellt, dass es statisch vorteilhaft ist, die Last nicht ohne Auflage der Unterkante 36 auf einem entsprechenden Anstoss vorzusehen, sondern wie in den Fig. 8 und 9 gezeigt, diese Unterkante 36 auf dem Boden 319 eines Aufnahmeschlitzes 314 vorzusehen. Der obere Abschnitt der Schieberplatte 30 kann zwischen der oberen Kante 318 und dem oberen Bolzen 346 eingeschoben werden, um dann mit der Nase den Haken 32 zu umfassen. Der Bolzen 346 kann dabei in einem unverlierbaren Presssitz in die entsprechenden quer verlaufenden Löcher in der Wand des Profils 310 eingeschoben werden. Damit ruht dann die Last einerseits auf den durchgehenden Seitenwänden mit den nur angeritzten Seitennuten 312 als auch auf der unteren Kante 319 des Schlitzes 314. Dies sind gegenüber der Ausführung der Fig. 6 vergleichbare und gegenüber der Fig. 7 mehr Last tragende Verhältnisse, insbesondere auch weil die Profile 310 üblicherweise aus Aluminium sind, während die Bolzen aus Stahl sind. Vorteilhafterweise wird ein Schlitz 314 in den geeigneten Abständen entlang des Profils 310 vorgesehen. Dabei wird durch das Anziehen der Mutter die Schieberplatte 130 wie bei den anderen Ausführungsbeispielen horizontal zurückgezogen, bis die Vorderkante 118 die Vorderkante des Profils 310 berührt und dort verspannt wird.

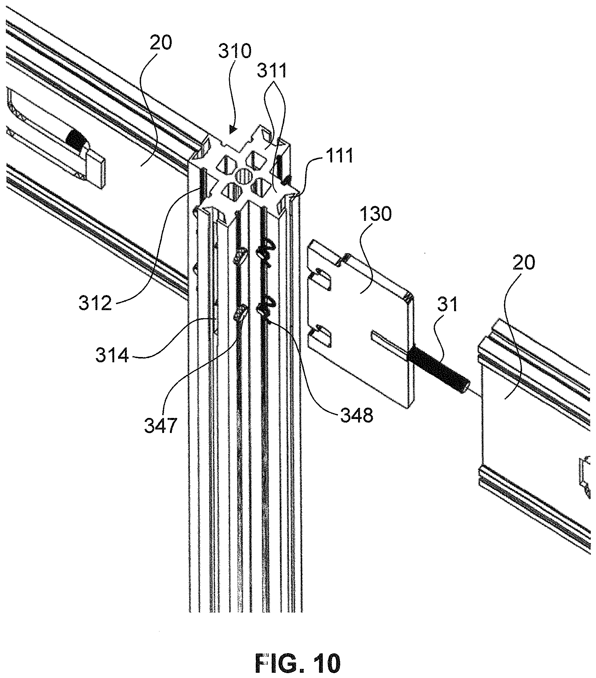

Die Fig. 10 zeigt eine perspektivische Ansicht eines Einsatzes eines Ausführungsbeispiels einer Klemmvorrichtung gemäss der Erfindung an einer weiteren Variante der Befestigung eines vertikalen Profilpfostens 310. In dem ansonsten gleichen Pfosten 310 sind hier keine Bolzen 346 eingepresst, sondern diese umfassen einen als Flansch ausgebildeten Bolzenkopf 347 und auf der gegenüberliegenden Seite einen Sprengring 348, oder gegegebenfalls einen Splint. Damit sind die Bolzen 346 gemäss diesem Ausführungsbeispiel gegen Herausfallen lösbar gesichert, während sie nach dem Ausführungsbeispiel der Fig. 8 und 9 in einem Presssitz als Sicherung gegen das Verlieren vorgesehen sind. In den dargestellten Ausführunsgbeispielen sind jeweils zwei Bolzen vorgesehen; es könnten auch drei oder vier Bolzen mit entsprechenden, mehr Nasen 32, 33 aufweisenden Schieberplatten 130 sein.

**BEZUGSZEICHENLISTE**

| | | | |
|---|---|---|---|
| 10 | Profilpfosten; erstes Profil | 22 | obere Profilschiene |
| 11 | mittlere Nut | 23 | untere Profilschiene |
| 12 | Seitennut | 24 | Anbaunuten |
| 13 | Innenhohlraum | 25 | Verriegelungsausnehmung |
| 14 | oberer Schlitz | 26 | Führungsnut |
| 15 | unterer Schlitz | 27 | Seitenwand |
| 16 | Anschlagfläche in der Nut | 29 | Vorderseitenwand |
| 20 | Querstrebe; zweites Profilstück | 30 | Schieberplatte |
| | | 31 | Verriegelungsbolzen / - schraube |
| 21 | Aufnahmehohlraum | | |
| 32 | oberer Haken | 129 | Seitenwände in Ausnehmung |
| 33 | unterer Haken | 130 | Schieberplatte |
| 34 | obere Seitenfläche | 137 | Hakenhohlraum |
| 35 | abgesetzte Stufe | 140 | Unterlegscheibe |
| 36 | untere Seitenkante | 145 | Bolzenloch |
| 37 | Hakenhohlraum | 146 | Bolzen |
| 38 | Hakennase | 149 | Anlagekante |
| 39 | Verbindungselement | 210 | Verlängerungsprofil |
| 40 | Halteklammer | 220 | Querstrebe; zweites Profilstück |
| 41 | Ausrichtungsnut | | |
| 42 | Durchführungsöffnung | 225 | Versorgungsleitungsausnehmung |
| 49 | Anlagekante | | |
| 50 | Mutter | 310 | Profilpfosten; erstes Profil |
| 51 | Schraubenachse | 311 | Rückwand der Einführnut |
| 90,91,92 | Oberseite | 312 | Seitennut |
| 110 | Stützkopf; erstes Profil | 314 | Schlitz |
| 111 | Einführnut | 318 | Unterkante |
| 112 | Eckausnehmung | 319 | Abstützfläche |
| 113 | Anschlussfläche | 320 | zweites Anbau-Profilstück; Aufschraubprofil |
| 114 | Loch | | |
| 115 | Deckelabschnitt | 321 | Aufnahmehohlraum |
| 116 | Bodenabschnitt | 325 | Mutter |
| 117 | Nutenwand | 326 | Unterlegscheibe |
| 118 | Vorderseitenwand | 327 | Befestigungsloch |
| 119 | Eckfläche | 328 | Befestigungsschraube |
| 120 | Querstrebe; zweites Profilstück | 329 | Seitenlängsflansch |
| | | 345 | Bolzenloch |
| 122 | obere Profilschiene | 346 | Bolzen |
| 123 | untere Profilschiene | 347 | Bolzenkopf |
| 124 | Anbaunuten | 348 | Sprengring |
| 125 | Verriegelungsausnehmung | | |
| 128 | Stufe | | |

## Patentansprüche

1. Profilverbindungssystem umfassend ein erstes Profilstück (10; 110; 310), ein zweites Profilstück (20, 120; 320), eine Klemmvorrichtung und mindestens ein Verriegelungselement (146, 346), wobei die Klemmvorrichtung eine Platte (30, 130), mindestens ein Hakenelement (32, 33) und ein Verspannelement (31; 40, 140; 50) aufweist, wobei die Klemmvorrichtung in eine in dem ersten Profilstück (10, 110; 310) vorgesehene Ausnehmung (11; 14, 15; 111; 314) einführbar ist und dabei das mindestens eine Hakenelement (32, 33) in das erste Profilstück (10; 110; 310) eingreift und mit dem Verspannelement (31; 40, 140; 50) in das mindestens eine dazu komplementäre Verriegelungselement (146; 346) des ersten Profilstücks (10; 110) in den lösbaren haltenden Eingriff bringbar ist, wobei das mindestens eine Hakenelement (32, 33) in der Ebene der Platte (30; 130) auf das erste Profilstück (10; 110; 310) ausgerichtet ist und eine L-förmige Ausnehmung bildet und wobei das Verspannelement (31; 40, 140; 50) auf der entgegengesetzten Seite der Platte (30, 130) gegenüber dem Hakenelement (32, 33) vorgesehen ist, um die Platte (30; 130) gegen das zweite Profilstück (20, 120; 320) zu verspannen, **dadurch gekennzeichnet, dass** das mindestens eine Verriegelungselement ein Bolzen (146; 346) ist, der in quer zur Ausnehmung (111) verlaufenden Löchern (145) im ersten Profilstück (10; 110; 310) vorgesehen ist, um beim Zusammenbau in der L-förmigen Ausnehmung positioniert und von dem Hakenelement (32, 33) umgriffen zu werden und um zur Verriegelung durch das Verspannelement gegenüber der Platte (30, 130) in einer ersten Richtung (51) angezogen zu werden,. und dass das mindestens eine Hakenelement (32, 33) eine Nase (38) umfasst, die sich in die L-förmige Ausnehmung hinein erstreckt.

2. Profilverbindungssystem nach Anspruch 1, **dadurch gekennzeichnet, dass** das Verspannelement eine mit der Platte (30; 130) verbundene Schraube (31) oder Bolzen sowie Sicherungselemente (40, 50) umfasst, welche Schraube (31) oder welcher Bolzen in einen auf der entgegengesetzten Seite der Platte (30, 130) gegenüber dem Hakenelement (32, 33) vorgesehenen Hohlraum (25) ragt, um mit den Sicherungselementen (40, 50) gegen das zweite Profilstück (20, 120, 320) verspannbar zu sein.

3. Profilverbindungssystem nach Anspruch 2, **dadurch gekennzeichnet, dass** das Verspannelement eine Schraube (31) und eine Mutter (50) als Sicherungselement umfasst.

4. Profilverbindungssystem nach Anspruch 2, **dadurch gekennzeichnet, dass** das Verspannelement einen Bolzen und eine Hebelverriegelung als Sicherungselement umfasst.

5. Profilverbindungssystem nach Anspruch 1, **dadurch gekennzeichnet, dass** ein Durchbruch der Wand hinter der Ausnehmung (111) ein Schlitz (314) ist.

6. Profilverbindungssystem nach Anspruch 5, **dadurch gekennzeichnet, dass** die Unterkante (319) des Durchbruchs (314) der Wand hinter der Ausnehmung (111) ausgestaltet ist, um als Widerlager für die Unterkante (36) der Platte (130) zu dienen.

7. Profilverbindungssystem nach einem der Ansprüche 1 bis 6, **dadurch gekennzeichnet, dass** der mindestens eine Bolzen (346) an seinem einen Ende über einen den Lochdurchmesser (145) der Ausnehmungswände (111) überragenden Flansch (347) und an dem anderen Ende über einen Splint, einen Sprengring (348) in einer Nut oder ein anderes das Herausfallen der Bolzen (146) verhinderndes Element verfügt.

8. Profilverbindungssystem nach einem der Ansprüche 1 bis 4, **dadurch gekennzeichnet, dass** die Verriegelungselemente Bodenbereiche (16) der Ausnehmungen (11; 111) umfassen, die durch die den Hakenelementen (32, 23) zugewiesenen Aufnahmeschlitze (14, 15) getrennt sind, damit beim Zusammenbau die Hakenelemente (32, 33) durch die Aufnahmeschlitze (14, 15) treten und die Bodenbereiche (16) vom Innenraum (13) her umgreifen und um zur Verriegelung durch das Verspannelement gegenüber der Platte (30, 130) angezogen zu werden.

9. Profilverbindungssystem nach einem der Ansprüche 1 bis 8, **dadurch gekennzeichnet, dass** die Platte (30; 130) mit ihrer Oberseite (34) in führendem und lasttragendem Kontakt in dem zweiten Profilstück (20, 120, 320) verspannbar ist und dass die Unterseite (36) der Platte (30, 130) auf einer Fläche (119) des ersten Profilstücks 10, 110) lasttragend abstützbar ist oder dass die Unterseite der Hakenausnehmung(en) (37; 137) auf mit der Platte lasttragend verbundenen Element(en) (146) abstützbar ist.

## Claims

1. A profile connection system comprising a first profile section (10; 110; 310), a second profile section (20, 120; 320), a clamping element and at least one locking element (146, 346), wherein the clamping element comprises a plate (30, 130), at least one hooking element (32, 33) and a locking element (31; 40, 140; 50), wherein the clamping element can be introduced into a recess (11; 14, 15; 111; 314) and wherein the at least one hook element (32, 33) engages with the first profile section (10; 110; 310) and with the clamping element (31; 40, 140; 50) can be brought into releasable retentive engagement with at least one locking element (146; 346) of the first profile section (10; 110) that is complementary to the former, wherein the at least one hook element (32, 33) is aligned in the plane of the plate (30; 130) on the first profile section (10; 110; 310) and forms a L-shaped recess and wherein the clamping element (31; 40, 140; 50) is provided on the opposing side of the plate (30, 130) relative to the hook element (32, 33), so as to clamp the plate (30; 130) against the second profile section (20, 120; 320), **characterised in that** the at least one locking element is a bolt (146; 346), provided in holes (145) in the first profile section (10, 110; 310) provided in traverse to the recess (111), to be positioned in the L-shaped recess and to be encompassed by the hook element (32, 33) and to be tightened against the plate (30, 130) in a first direction (51) for a locking action by the clamping element, and **in that** the at least one hook element (32, 33) has a nose (38), extending into the L-shaped recess.

2. The profile connection system in accordance with claim 1, **characterised in that** the clamping element comprises a screw (31) or a bolt connected with the plate (30; 130), which screw (31) or which bolt projects into a cavity (25) provided on the opposite side of the plate (30; 130)in view of the hook element (32, 33), so that it can be clamped with securing elements (40, 50) against the second profile section (20, 120, 320).

3. The profile connection system in accordance with claim 2, **characterised in that** the clamping element comprises a screw (31) and a nut (50) as securing element.

4. The profile connection system in accordance with claim 2, **characterised in that** the clamping element comprises a bolt and a lever lock as securing element.

5. The profile connection system in accordance with claim 1, **characterised in that** the breakthrough in the wall behind the recess (111) is a slit (314).

6. The profile connection system in accordance with claim 5, **characterised in that** the lower edge (319) of the breakthrough (314) of the wall is provided behind the recess (111) so as to permit the plate (130) engaging the lower edge (36) of the plate (130).

7. The profile connection system in accordance with any one of the claims 1 to 6, **characterised in that** the at least one bolt (346) at its one end has a flange (347) projecting over the hole diameter (145) of the recess walls (111), and at the other end has a pin, a retaining ring (348) in a groove, or another element preventing the bolt (146) from falling out.

8. The profile connection system in accordance with any one of the claims 1 to 4, **characterised in that** the locking elements comprise floor regions (16) of the recesses (11; 111), which are separated by the accommodation slots (14, 15) assigned to the hook elements (32, 33), so that on assembly the hook elements (32, 33) pass through the accommodation slots (14, 15) and encompass the floor regions (16) of the interior (13), and so as to be tightened by means of the clamping element relative to the plate (30, 130) for locking purposes.

9. The profile connection system in accordance with any one of the claims 1 to 8, **characterised in that** the plate (30; 130) can be clamped with its upper face (34) in guiding and load-bearing contact in the second profile section (20, 120, 320), and **in that** the lower face (36) of the plate (30, 130) can be supported in a load-bearing manner on a surface (119) of the first profile section (10, 110), or **in that** the lower face of the hook recesses (37; 137) can be supported on element(s) (146) connected with the plate in a load-bearing manner.

## Revendications

1. Système d'assemblage de profilés comprenant une première section de profilé (10; 110; 310), une deuxième section de profilé (20, 120; 320), un élément de serrage et au moins un élément de verrouillage (146, 346), dans lequel l'élément de serrage comprend une plaque (30, 130), au moins un élément de crochet (32, 33) et un élément de verrouillage (31; 40, 140; 50), l'élément de serrage pouvant être introduit dans un évidement (11; 14, 15; 111; 314) et dans lequel l'au moins un élément de crochet (32, 33) vient en prise avec la première section de profilé (10; 110; 310) et avec l'élément de serrage (31; 40, 140; 50) peut être amené en prise de retenue amovible avec au moins un élément de verrouillage (146; 346) de la première section de profilé (10; 110) qui est complémentaire au premier, où l'au moins un élément de crochet (32, 33) est aligné dans le plan de la plaque (30; 130) sur la première section de profilé (10; 110; 310) et forme un évidement en forme de L et dans lequel l'élément de serrage (31; 40, 140; 50) est prévu sur le côté opposé de la plaque (30, 130) par rapport à l'élément de crochet (32, 33), afin de serrer la plaque (30; 130) contre la deuxième section de profilé (20, 120; 320), **caractérisé en ce que** l'au moins un élément de verrouillage est un boulon (146; 346), prévu dans des trous (145) dans la première section de profilé (10, 110; 310) qui sont prévus en travers de l'évidement (111), pour être positionné dans l'évidement en forme de L et pour être entouré par l'élément de crochet (32, 33) et pour être serré contre la plaque (30, 130) dans une première direction (51) pour un blocage par l'élément de serrage, et **en ce que** l'au moins un élément de crochet (32, 33) a un nez (38), s'étendant dans l'évidement en forme de L.

2. Système d'assemblage de profilés selon la revendication 1, **caractérisé en ce que** l'élément de serrage comprend une vis (31) ou un boulon relié à la plaque (30; 130), laquelle vis (31) ou lequel boulon fait saillie dans une cavité (25) prévue sur le côté opposé de la plaque (30; 130) face à l'élément du crochet (32, 33), de manière à pouvoir être serré contre la deuxième section de profilé (20, 120, 320) par les éléments de fixation (40, 50).

3. Système d'assemblage de profilés selon la revendication 2, **caractérisé en ce que** l'élément de serrage comprend une vis (31) et un écrou (50) comme élément de fixation.

4. Système d'assemblage de profilés selon la revendication 2, **caractérisé en ce que** l'élément de serrage comprend un boulon et un verrou à levier comme élément de fixation.

5. Système d'assemblage de profilés selon la revendication 1, **caractérisé en ce que** la traversée de la paroi derrière l'évidement (111) est une fente (314) .

6. Système d'assemblage de profilés selon la revendication 5, **caractérisé en ce que** le bord inférieur (319) de la traversée (314) de la paroi est prévu derrière l'évidement (111) de manière à permettre à la plaque (130) d'engager le bord inférieur (36) de la plaque (130).

7. Système d'assemblage de profilés selon l'une quelconque des revendications 1 à 6, **caractérisé en ce que** l'au moins un boulon (346) présente à une extrémité une bride (347) dépassant du diamètre (145) des parois (111) de l'évidement et à l'autre extrémité un axe, une bague de retenue (348) dans une rainure ou un autre élément qui empêche le boulon (146) de tomber.

8. Système d'assemblage de profilés selon l'une quelconque des revendications 1 à 4, **caractérisé en ce que** les éléments de verrouillage comprennent des zones de plancher (16) des évidements (11; 111) qui sont séparées par les fentes de logement (14, 15) affectées aux éléments de crochet (32, 33), de sorte que lors du montage les éléments de crochet (32, 33) passent par les fentes de logement (14, 15) et entourent les zones de plancher (16) du côté intérieur (13) et soient serrées par rapport à la plaque (30, 130) pour assurer leur blocage.

9. Système d'assemblage de profilés selon l'une quelconque des revendications 1 à 8, **caractérisé en ce que** la plaque (30; 130) peut être serré avec sa face supérieure (34) dans la deuxième section de profilé (20, 120, 320) pour le guidage et le contact porteur, et **en ce que** la face inférieure (36) de la plaque (30, 130) peut être supportée de manière portante sur une surface (119) de la première section de profilé (10, 110), ou **en ce que** la face inférieure des creux du crochet (37; 137) peut être soutenue sur un ou des éléments (146) reliés à la plaque pour porter des charges.
